# FASCICULE DE BREVET EUROPEEN

(11) **EP 2 793 576 B1**
(45) Date de publication et mention de la délivrance du brevet: **17.11.2021**
(21) Numéro de dépôt: 12810291.0
(22) Date de dépôt: 21.12.2012
(51) Int. Cl.: A01N 27/00, A01N 25/04, A01N 25/30, A01P 3/00, A01P 7/02, A01P 7/04

(54) **UTILISATION D'UNE COMPOSITION VAPORISABLE POUR LA PROTECTION DES PLANTES CULTIVEES CONTRE LES RAVAGEURS**
VERWENDUNG EINER VERDAMPFBAREN ZUSAMMENSETZUNG ZUM SCHÜTZEN VON KULTURPFLANZEN VOR SCHÄDLINGEN
USE OF A VAPORIZABLE COMPOSITION TO PROTECT CULTIVATED PLANTS FROM PESTS

(30) Priorité: 22.12.2011 FR 1162264
(43) Date de publication de la demande: 29.10.2014
(73) Titulaire: TOTAL MARKETING SERVICES, 92800 Puteaux (FR)
(72) Inventeur: BUREAU, Eric, F-78125 Saint Hilarion (FR)
(74) Mandataire: Hirsch & Associés
(86) Numéro de dépôt international: PCT/EP2012/076593
(87) Numéro de publication internationale: WO 2013/092977

(56) Documents cités:
- EP-A1- 0 360 883
- EP-A2- 0 392 127
- WO-A2-2006/126211
- FR-A1- 2 588 722
- US-A- 4 230 694
- US-A1- 2005 261 379
- US-A1- 2010 016 447
- O Nicetic ET AL: "Integrated pest management of two-spotted mite Tetranychus urticae on greenhouse roses using petroleum spray oil and the predatory mite Phytoseiulus persimilis", EXPERIMENTAL AND APPLIED ACAROLOGY., vol. 25, no. 1, 1 January 2001 (2001-01-01), pages 37-53, XP55449996, GB ISSN: 0168-8162, DOI: 10.1023/A:1010668122693
- D J Rae ' ET AL: "Effects of petroleum spray oils without and with copper fungicides on the control of citrus leafminer, Phyllocnistis citrella Stainton ( Lepidoptera: Gracillariidae)", AUSTRALIAN JOURNAL OF ENTOMOLOGY, vol. 35, no. 3, 1 January 1996 (1996-01-01), pages 247-25, XP55449998, AU ISSN: 1326-6756

## Description

La présente invention concerne l'utilisation d'une composition vaporisable pour la protection contre les ravageurs des plantes cultivées au cours de leur croissance. La composition vaporisable pour la protection de ces plantes présente des caractéristiques acaricides et insecticides mais non toxiques pour la personne humaine et l'environnement. Cette composition est typiquement nocive vis à vis des ravageurs que constituent par exemple les organismes tels l'oïdium ou le « botrytis », ou encore les insectes tels que les pucerons, les mouches blanches ou encore les acariens.

De nos jours, il est usuel de pratiquer la culture extensive de plantes sous serre, que ce soit des fleurs, des légumes, des fruits ou encore des plantes vertes. Parmi les fleurs cultivées, il y a les roses, les chrysanthèmes, les tulipes, les alstroemia, les hortensias, les plantes à feuillage, le muguet ou encore les oeillets. Pour les fruits et les légumes, il y a par exemple les tomates, les melons et les poivrons. Ce mode de culture, sous atmosphère et environnement contrôlé par exemple confiné sous serres, favorise le développement de ces ravageurs qui constituent et se révèlent un vrai fléau pour les cultivateurs.

Pour contrôler ce type de maladie ou d'infestation massive des cultures, on utilise des insecticides, des acaricides et des fongicides de formulation chimique industrielle dont certains se révèlent toxiques pour les utilisateurs. Il est apparu très vite que l'aspersion des cultures avec ces produits pouvait être nocive pour la santé des ouvriers agricoles présents dans les serres. En effet, des vapeurs subsistent après aspersion des cultures et il est préconisé d'attendre un certain temps avant de pénétrer à nouveau dans les serres. Ces produits sont également très nocifs pour l'environnement, par pollution directe et indirecte de l'eau des nappes phréatiques alimentées par les écoulements d'eaux de pluie et les eaux de ruissellement issues des plantations suite aux aspersions.

En outre, il a été constaté que ces organismes et/ou insectes et/ou acariens pouvaient développer une résistance à ces produits au cours du temps. Pour contrecarrer cette résistance des ravageurs, on est obligé d'utiliser des quantités croissantes de ces produits, par exemple en augmentant leur concentration dans l'eau. Cependant, cette augmentation tend à accroitre le niveau de la résistance des ravageurs ainsi que le risque de phytotoxicité des dispersions contenant ces produits.

Pour combattre ces ravageurs, l'aspersion par des huiles horticoles, considérées comme moins phytotoxiques, a été pratiquée. Ainsi des émulsions aqueuses contenant de 0,3 à 0,5 % en poids de ces huiles horticoles constituaient d'excellents moyens de soigner les infections par l'oïdium de la rose et de limiter l'arrivée de la maladie par des aspersions faites tous les 7 à 15 jours. Cette aspersion permettait également de maintenir le niveau des populations d'acariens au dessous du seuil d'impact économique à la dose de 0,5% en poids lorsque les traitements avaient débuté avant d'atteindre ce seuil pour ces espèces (voir par exemple l'article de O.Nicetic, D.M.Watson et G.A.C.Beattie dans Spray oils beyond 2000 de la page 387 à la page 395). Par huiles horticoles ou HMO, on entend les huiles minérales dont le pourcentage en produits non sulfonés déterminé par la norme ASTM D483 est supérieur à 92% en poids. Cette teneur en produit non sulfonés est une caractéristique très importante car elle détermine le caractère plus ou moins phytotoxique d'une huile. On sait par exemple que plus la quantité de résidus non sulfonés est élevée moins elle est phytotoxique c'est-à-dire toxique pour les cultures lors d'une aspersion récurrente.

De façon générale, il est toujours nécessaire de limiter voire supprimer l'utilisation de produits dont le caractère phytotoxique devient trop important par exemple lorsqu'on augmente leur concentration dans l'eau pour obtenir une efficacité optimale contre les ravageurs. C'est pourquoi on recherche des produits dont le caractère phytotoxique est quasi nul pour une efficacité maximale pour les aspects curatifs et préventifs des maladies sur les plantes et les fleurs liées à la présence des ravageurs.

La culture extensive de plantes, en particulier des fleurs destinées à l'exportation constitue un marché très important pour les pays producteurs de fleurs comme par exemple certains pays d'Amérique latine, d'Afrique et d'Europe. Dans ce cas, le problème majeur est de maintenir les fleurs en parfaite santé depuis le début de la pousse jusqu'au lieu de vente, principalement sur les marchés européens et américains. Il est particulièrement important pour ces fleurs de les protéger de tous les ravageurs. <insérer page 2a>

La présente invention a donc pour but de disposer de produits non phytotoxiques, facilement dispersés sous forme d'émulsion dans l'eau avant d'être pulvérisés sur des cultures pendant la période de croissance de la plante. Généralement, la dispersion de ces produits vise à recouvrir la tige et les jeunes feuilles de la plante.

La présente invention a donc pour objet l'utilisation d'une émulsion d'huile pour le traitement acaricide et insecticide des tiges et feuilles d'une plante au cours de sa croissance dans des espaces de cultures intensives confinées, l'émulsion comprenant de l'eau et une huile paraffinique d'origine pétrolière de température d'ébullition comprise entre 200 et 450°C, et de viscosité inférieure ou

Le document Nicetic et al.: "Integrated pest management of two-spotted mite Tetranychus urticae on greenhouse roses using petroleum spray oil and the predatory mite Phytoseiulus persimilis", Experimental and Applied Acarology, 25 : 37-53, 2001, XP55449996 décrit l'utilisation d'une huile paraffinique d'origine pétrolière sous forme d'émulsion aqueuse pour lutter contre des acariens (T. *urticae)* sur des roses cultivées sous serres. Cette huile a pour dénomination commerciale D-C-Tron Plus^{®}. Elle est décrite par référence au document Rae et al.: "Effects of petroleum spray oils without and with copper fungicides on the control of citrus leafminer, Phyllocnistis citrella Stainton (Lepidoptera: Gracillariidae), Australian Journal of Entomology, 1 jan. 1996, p. 247-25, XP55449998. Selon le tableau 2 du document Rae *et al.,* l'huile D-C-Tron Plus^{®} présente une teneur en résidu non sulfoné de 92%. L'huile paraffinique est mélangée à de l'eau à raison de 0,5% (v/v) quand la pulvérisation est appliquée à une date fixée (« calendar spray ») ou à raison de 1% (v/v) quand la pulvérisation est dictée par l'apparition des acariens (« monitored spray »). égale à 20 mm2/s à 40°C et dont la teneur de résidu non sulfoné selon la norme ASTM D483 est supérieure ou égale à 99%, et comprenant au moins 20% en poids de naphtènes mono ou polycycliques. L'huile paraffinique est introduite sous forme de concentré émulsionnable stable comprenant de l'eau, la concentration d'huile paraffinique introduite sous forme de concentré émulsionnable stable dans l'eau étant supérieure à 1% en poids.

Dans un mode préféré, l'huile paraffinique présente une température de distillation initiale de 250°C.

Par huile paraffinique on entend une huile obtenue par déaromatisation/fractionnement d'au moins une coupe hydrocarbonée obtenue par distillation du pétrole brut, de température de coupe comprise entre 250 et 450°C et/ou une huile issue du déparaffinage catalytique de ces mêmes coupes, cette huile présentant un intervalle d'ébullition inférieur ou égal à 75°C. Pour l'huile obtenue après déaromatisation/fractionnement, il peut s'agir de coupes de distillation atmosphériques et/ou sous vide de températures comprises entre 250 et 450°C, du cokage et/ou de la viscoréduction de résidus. Ces coupes hydrocarbonées seront de préférence désulfurées à moins de 15 ppm de soufre soit par hydrotraitement, soit par hydrocraquage avant d'être déaromatisées et fractionnées en vue d'atteindre des coupes d'intervalle de distillation inférieure ou égale à 75°C entre 250 et 450°C, contenant moins de 500ppm d'aromatiques. L'huile paraffinique préférée comprend une coupe hydrocarbonée ou un mélange de coupes hydrocarbonées de température de distillation initiale d'au moins 250°C, comprenant au moins 20% en poids de naphtènes mono et/ou polycycliques et dont la viscosité est comprise entre 5 et 20 mm2/s à 40°C. De manière avantageuse l'huile paraffinique a une viscosité comprise entre 7 et 15 mm2/s à 40°C.

Dans un premier mode de réalisation de l'utilisation selon l'invention, l'eau émulsionnée à disperser comprend au plus 10 % en poids d'huile paraffinique.

Dans un second mode de réalisation de l'utilisation selon l'invention, l'eau émulsionnée à disperser comprend au plus 5 % en poids d'huile paraffinique.

Dans un mode particulier, l'émulsion d'huile comprend en mélange avec l'huile paraffinique des tensioactifs, sous forme d'un concentré émulsionnable stable comprenant de l'eau, pour stabiliser l'émulsion préparée avant aspersion des cultures et pendant toute la durée de celle-ci.

Parmi les tensioactifs utilisés pour stabiliser l'émulsion, on préfère les tensioactifs du groupe constitué par les acides oléiques polyéthoxylés comprenant jusqu'à 10 radicaux éthoxylés, de préférence de 4 à 8, les mono et/ou polycarboxylates de sorbitan, les mono et/ou polycarboxylates de sorbitan éthoxylés et/ou les mono et/ou polycarboxylates de glycérol éthoxylés, chaque groupement carboxylate comprenant 1 à 3 chaînes carbonées de 12 à 20 atomes de carbone à au moins une liaison oléfinique, chaque groupement éthoxylé comprenant de 1 à 5 groupements éthoxylés, et les alcools éthoxylés correspondant aux dits acides.

Le rapport des concentrations de l'ensemble des tensioactifs introduits et de l'huile varie de 0,1:100 à 5:100.

De préférence, l'huile et les tensioactifs sont introduits dans l'eau de dispersion sous forme d'un concentré émulsionnable stable comprenant de 0,0001 à 1% en poids d'eau.

L'avantage d'utiliser de telles huiles paraffiniques éventuellement en mélange avec des tensioactifs est qu'elles ne sont pas phytotoxiques pour la plante et l'environnement aux concentrations envisagées à plus de 1% en poids dans l'eau. En particulier, il n'y a pas de vapeurs toxiques qui obligent les ouvriers agricoles à attendre que toutes celles-ci retombent avant d'entrer dans les serres après aspersion des cultures par l'émulsion. En outre, les résultats au regard du traitement des ravageurs (acariens, insectes et organismes fongiques) sont aussi bons voire meilleurs que ceux obtenus avec des produits chimiques, pesticides, fongicides et insecticides classiques issus de l'industrie chimique. En outre, on ne constate pas de développement de résistance à ces huiles paraffiniques comme il avait été constaté pour ces produits, l'action étant purement physique contrairement aux produits classiques usuellement utilisés.

De plus, comparées aux émulsions d'huiles horticoles, les émulsions à base d'huile paraffinique selon l'invention sont moins phytotoxiques, la teneur en résidus non sulfonés de ces huiles étant très supérieure à 92%. Cette caractéristique permet en outre d'augmenter la concentration en huile de l'émulsion à disperser au-delà de 1% en poids dans l'eau ce qui permet d'obtenir un efficacité optimale vis-à-vis des ravageurs sans atteindre de seuil de phytotoxicité, mais aussi de diminuer le temps entre deux traitements si nécessaire.

La présente invention a également pour objet un procédé de traitement acaricide, et insecticide des cultures végétales en atmosphère contrôlée et confinée comprenant :
- au moins une première étape de mise en émulsion dans l'eau d'une huile paraffinique d'origine pétrolière de température comprise entre 200 et 450°C, de viscosité inférieure ou égale à 20 mm2/s à 40°C, dont la teneur en résidu non sulfoné selon la norme ASTM D483 est supérieure ou égale à 99% et comprenant plus de 20% en poids d'hydrocarbures mono et poly naphténiques, éventuellement en mélange avec des tensioactifs et une quantité d'eau inférieure ou égale à 1%, la concentration d'huile paraffinique introduite sous forme de concentré émulsionnable stable dans l'eau étant supérieure à 1% en poids ;
- au moins une deuxième étape d'aspersion de l'émulsion obtenue à l'étape précédente sur la tige et les feuilles de la plante avant sa floraison, cette aspersion se répétant au moins tous les sept jours après la première étape de dispersion, pendant tout le temps de la pousse, de préférence au moins tous les 15 jours jusqu'à la floraison.

Selon la nature du traitement à appliquer et de la concentration en ravageurs sur les plantes, on pourra ajuster la concentration en huile paraffinique dans l'eau à moins de 5% en poids. De façon préférée, la concentration en huile paraffinique pourra être ajustée de plus de 1% jusqu'à 2%, cette concentration permettant d'augmenter avantageusement le temps passé entre deux campagnes d'aspersion dans les serres.

Les exemples ci-après sont données pour illustrée l'invention c'est-à-dire pour illustrer l'efficacité de l'invention comparativement à l'art antérieur. Ils n'ont pas pour but de limiter la portée de la présente invention.

### EXEMPLE 1 (traitement des acariens)

Le présent exemple vise à démontrer l'efficacité de l'huile paraffinique selon l'invention en émulsion dans l'eau comparée à celle des produits acaricides usuellement utilisés dans les serres pour lutter contre les acariens en particulier le *Tetranychus cinnabarinnus* ou araignée rouge sur les cultures de rose sous serre.

Des essais ont été réalisés dans cinq serres. Dans chacune d'elles, on a délimité 10 lits de culture séparés par des allées. Chaque lit comprend un nombre important de boutons floraux. Au cours du repérage des lits destinés à l'essai on a détecté un niveau d'infestation important de *Tetranychus cinnabarinnus,* c'est-à dire la présence d'oeufs, de nymphes et d'adultes. Chacun des lits est ensuite traité par une émulsion différente au moyen d'un équipement de pulvérisation comprenant une pompe stationnaire à piston, vendue sous le nom de pompe Robin MS 330 Eurogroup, équipée de deux tuyaux et de six jets. Ces jets (Tee Jet 8001vk) sont calibrés pour envoyer 1 litre par minute d'émulsion, de 7 à 9 litres par lit, sous forme de gouttes de 500 microns sur 30 à 40 centimètres de hauteur de feuillage.

Le programme de l'essai comporte quatre traitements différents incluant le Banole EC ainsi que des comparaisons de traitements commerciaux.

Dans le tableau I sont rassemblés le descriptif des émulsions et solutions pulvérisées sur les feuillages des fleurs pendant les tests permettant de comparer l'efficacité du produit selon l'invention aux produits acaricides commerciaux utilisés. Le produit correspondant aux émulsions selon l'invention présente la composition suivante :
- 97% d'huile paraffinique contenant au moins 20% de naphtènes et au moins 30% de composés isoparaffiniques de viscosité égale à 8,5mm2/s et contenant 99% de résidus non sulfonés
- 3% en poids d'un mélange tensioactifs

Ce produit est vendu sous le nom commercial de Banole EC.

**TABLEAU I**

| Ordre de traitement | Nature du produit | Quantité de produit dans l'émulsion (%pds) | Quantité d'eau pulvérisée (l/ha) | Vitesse d'épandage |
|---|---|---|---|---|
| A^{∗} | Banole EC | 1 | 1700 | 8l/lit de 50 m2 |
| B | Banole EC | 1,5 | 1700 | 8l/lit de 50 m2 |
| C | Témoin | 0 | 1700 | 8l/lit de 50 m2 |
| D | Produit acaricide commercial (PAC) | X | 1700 | 8l/lit de 50 m2 |
| E | Banole EC + PAC | 1 + X | 1700 | 8l/lit de 50 m2 |

| | | | | |
|---|---|---|---|---|
| ^{∗} exemple hors invention | | | | |

Le tableau II rassemble un descriptif des produits acaricides testés seuls ou en mélange (1+x) avec le produit de l'invention.

**TABLEAU II**

| Traitement | Nature du produit | Quantité X de produit dans l'émulsion (l/ha) | Vitesse d'épandage |
|---|---|---|---|
| D1 | Miteclean (pyrimediphen) | 0,3 | 8l/lit de 50 m2 |
| D2 | Polo+Oberon (diafentiuron+Spiromesifen | 1+0,25 | 8l/lit de 50 m2 |
| D3 | Miteclean (pyrimediphen) | 0,3 | 8l/lit de 50 m2 |
| E1 | Miteclean (pyrimediphen) | 0,3 | 8l/lit de 50 m2 |
| E2 | Polo+Oberon (diafentiuron+Spiromesifen | 1+0,25 | 8l/lit de 50 m2 |
| E3 | Miteclean (pyrimediphen) | 0,3 | 8l/lit de 50 m2 |

Les produits commerciaux (Di) sont préparés et épandus comme indiqué par le vendeur du produit. L'émulsion préparée avec un produit selon l'invention consiste à introduire le produit dans l'eau et de le mélanger pendant trois minutes. Lorsque l'émulsion contient en sus un acaricide (Ei), le produit selon l'invention est introduit en dernier dans l'émulsion.

Une observation des lits est effectuée chaque semaine, mais toujours trois ou quatre jours après pulvérisation. Durant la pulvérisation du produit selon l'invention, l'émulsion reste stable et homogène, et les feuilles traitées par ce produit ne montrent aucun des symptômes classiques de sensibilité ou de toxicité et aucun changement d'apparence.

Dans le Tableau III sont rassemblés les résultats constatés avec les différents traitements sur les oeufs et adultes présents initialement sur les feuilles.

**TABLEAU III**

| Traitement | Oeufs | | | | | Adultes | | | | |
|---|---|---|---|---|---|---|---|---|---|---|
| | J1 | J2 J3 | | J4 | Moy. | J1 | J2 | J3 | J4 | Moy. |
| A | 53 | 359 | 10 | 0 | 21,1 | 44 | 79 | 8 | 0 | 6,55 |
| B | 71 | 0 | 0 | 0 | 3,55 | 41 | 18 | 0 | 0 | 2,95 |
| E1 | 115 | 428 | 0 | 0 | 27,15 | 43 | 52 | 0 | 0 | 4,75 |
| D1 | 18 | 396 | 0 | 0 | 20,7 | 22 | 28 | 0 | 0 | 2,5 |
| C | 512 | 1295 | 2400 | 1378 | 298 | 121 | 829 | 465 | 266 | 65,5 |

Les observations ont été faites tous les sept jours à partir de J1( premier jour d'observation).

Le témoin C et l'observation visuelle mettent en évidence la présence de *Tetranychus cinnabarinnus* ou araignée rouge sous l'aspect de partie brune de la feuille et de résidus blanchâtres.

Après quelques jours de traitement, les nouvelles feuilles apparues ne présentent plus les caractéristiques liées à la présence de ces fléaux parasites. Avec le temps, les oeufs et les adultes disparaissent des feuilles.

D'après le tableau III, on constate que le produit selon l'invention dilué à 1% et à 1,5% dans l'eau est aussi efficace que les acaricides usuellement utilisés. Il est probable qu'avec le produit selon l'invention, il y ait asphyxie des acariens.

### EXEMPLE 2 (traitement de l'oïdium de la rose, Sphaeroteca panosa)

Le présent exemple vise à démontrer l'efficacité de l'huile paraffinique selon l'invention en émulsion dans l'eau comparée à celle des produits fongicides usuellement utilisés dans les serres pour lutter contre les sphaeroteca panosa (champignon), en particulier l'oïdium de la rose sur les cultures de rose sous serre.

On opère comme dans l'exemple I pour l'épandage des insecticides et du produit selon l'invention qui est comme précédemment du Banole EC.

Un descriptif des traitements effectués est donné dans le tableau IV ci-après.

**TABLEAU IV**

| Ordre de traitement | Nature du produit | Quantité de produit dans l'émulsion (%pds) | Quantité d'eau déversée (I/ha) | Vitesse d'épandage |
|---|---|---|---|---|
| A'^{∗} | Banole EC | 1 | 1700 | 8l/lit de 50 m2 |
| D' | Produit fongicide commercial | Y | 1700 | 8l/lit de 50 m2 |

### ^{∗} exemple hors invention

Deux produits commerciaux sont testés en comparaison : leurs conditions d'utilisation sont données dans le tableau V ci-après.

**TABLEAU V**

| Traitement | Nature du produit | Quantité Y de produit dans l'émulsion (I/ha) | Vitesse d'épandage |
|---|---|---|---|
| D'1 | Bicarbonate de soude | 2 | 8l/lit de 50 m2 |
| D'2 | Elosal(soufre) | 4 | 8l/lit de 50 m2 |

Les différentes émulsions sont émulsionnées et dispersées comme décrit dans l'exemple 1 avec le même type de matériel.

Comme précédemment dans l'exemple 1, durant la pulvérisation du produit selon l'invention, l'émulsion reste stable et homogène, et les feuilles traitées par ce produit ne montrent aucun des symptômes classiques de sensibilité ou de toxicité et aucun changement d'apparence.

Le tableau VI ci-après donne les résultats sur l'incidence de l'oïdium sur les lots traités soit avec le Banole EC soit avec des fongicides commerciaux.

**TABLEAU VI**

| Traitement | Observation 1 Observation 2 | | Observation 3 | Observation 4 | Moyenne (a) |
|---|---|---|---|---|---|
| A' | 30^{∗} | 7^{∗} | 0^{∗} | 0^{∗} | 0,2887 |
| D' | 30^{∗} | 5^{∗} | 0^{∗} | 0^{∗} | 0,3118 |

| | | | | | |
|---|---|---|---|---|---|
| ^{∗} : Nombre de symptômes par plante (a) : moyenne obtenue sur l'ensemble des observations réalisées pendant l'essai | | | | | |

Bien que la moyenne du nombre de symptômes observés durant l'essai soit inférieure dans le traitement Banole EC par rapport au traitement fongicide commercial, une comparaison statistique de rang multiple au seuil de confiance de 95% (Fischer) suggère que le contrôle a été similaire entre les traitements fongicides. L'huile minérale paraffinique Banole EC appliquée à la dose de 1 % du volume d'aspersion a été efficace en inhibant le développement du champignon responsable de l'oïdium.

L'huile Banole EC, possède une série de caractéristiques qui le rendent efficace dans le contrôle des maladies des plantes, ce qui explique sa réponse favorable sur les symptômes de cette maladie. L'aspect le plus important est l'action fongistatique dont bénéficient les huiles minérales paraffiniques. Dans le cas de *Sphaeroteca panosa,* cette action explique le blocage du développement du mycélium du champignon. Par ailleurs, la persistance et la ténacité du produit facilitent sa permanence sur le feuillage et peuvent améliorer son effet fongistatique, en interférant les processus d'échanges gazeux du pathogène.

D'autres produits commerciaux que le Banole EC peuvent être utilisés dans la mise en oeuvre de l'invention, tels que Ovispray commercialisé par la Société TOTAL.

## Revendications

1. Utilisation d'une émulsion d'huile pour le traitement acaricide et insecticide des tiges et feuilles d'une plante au cours de sa croissance dans des espaces de cultures intensives confinées, **caractérisée en ce que** l'émulsion comprend de l'eau et une huile paraffinique d'origine pétrolière de température d'ébullition comprise entre 200 et 450°C, de viscosité inférieure ou égale à 20 mm2/s à 40°C, dont la teneur en résidu non sulfoné selon la norme ASTM D483 est supérieure ou égale à 99%, et comprenant au moins 20% en poids de naphtènes mono ou polycycliques, introduite sous forme de concentré émulsionnable stable comprenant de l'eau, la concentration d'huile paraffinique introduite sous forme de concentré émulsionnable stable dans l'eau étant supérieure à 1% en poids.

2. Utilisation selon la revendication 1, **caractérisée en ce que** l'huile paraffinique présente une température de distillation initiale de 250°C.

3. Utilisation selon l'une des revendications 1 et 2, **caractérisée en ce que** l'huile paraffinique a été obtenue par déaromatisation/fractionnement d'au moins une coupe hydrocarbonée issue de la distillation du pétrole brut, du cokage et/ou de la viscoréduction de résidu de température de coupe comprise entre 250 et 450°C et/ou par déparaffinage catalytique de ces mêmes coupes, cette huile présentant un intervalle d'ébullition inférieur ou égal à 75°C.

4. Utilisation selon l'une des revendications précédentes, **caractérisée en ce que** l'huile paraffinique comprend une coupe hydrocarbonée ou un mélange de coupes hydrocarbonées de température de distillation initiale d'au moins 250°C, et dont la viscosité est comprise entre 5 et 20 mm2/s.

5. Utilisation selon l'une des revendications précédentes, **caractérisée en ce que** ladite huile paraffinique comprend moins de 15 ppm de soufre et moins de 500ppm d'aromatiques.

6. Utilisation selon l'une des revendications précédentes, **caractérisée en ce que** l'émulsion d'huile comprend en mélange avec l'huile paraffinique sous forme de concentré émulsionnable stable des tensioactifs du groupe constitué par les acides oléiques polyéthoxylés comprenant jusqu'à 10 radicaux éthoxylés, de préférence de 4 à 8, les mono et/ou polycarboxylates de sorbitan, les mono et/ou polycarboxylates de sorbitan éthoxylés et/ou les mono et/ou polycarboxylates de glycérol éthoxylés, chaque groupement carboxylate comprenant 1 à 3 chaînes carbonées de 12 à 20 atomes de carbone à au moins une liaison oléfinique, chaque groupement éthoxylé comprenant de 1 à 5 groupements éthoxylés, et les alcools éthoxylés comparables aux dits acides.

7. Utilisation selon la revendication 6, **caractérisée en ce que** le rapport des concentrations de l'ensemble des tensioactifs introduits et de l'huile varie de 0,1:100 à 5:100.

8. Utilisation selon l'une des revendications 6 et 7, **caractérisée en ce que** l'huile paraffinique et les tensioactifs sont introduits dans l'eau sous forme d'un concentré émulsionnable comprenant de 0,0001 à 1% en poids d'eau.

9. Utilisation selon l'une des revendications 6 à 8 **caractérisée en ce que** l'émulsion est composée de 90 à moins de 99% en poids d'eau et de 10 à plus de 1 % d'une huile paraffinique sous forme d'un concentré émulsionnable, de préférence de 97 à moins de 99% en poids d'eau et de plus de 1 à 3% d'huile paraffinique.

10. Procédé de traitement acaricide et insecticide des cultures végétales en atmosphère contrôlée et confinée comprenant :
- au moins une première étape de mise en émulsion dans l'eau d'une huile paraffinique d'origine pétrolière de température comprise entre 200 et 450°C, de viscosité inférieure ou égale à 20 mm2/s, dont la teneur en résidu non sulfoné selon la norme ASTM D483 est supérieure ou égale à 99% et comprenant plus de 20% en poids d'hydrocarbures mono et polynaphténiques, éventuellement en mélange avec des tensioactifs et une quantité d'eau inférieure ou égale à 1%, la concentration d'huile paraffinique introduite sous forme de concentré émulsionnable stable dans l'eau étant supérieure à 1% en poids ;
- au moins une deuxième étape d'aspersion de l'émulsion obtenue à l'étape précédente sur la tige et les feuilles de la plante avant sa floraison, cette dispersion se répétant au moins tous les sept jours après la première, aspersion pendant tout le temps de la pousse, de préférence au moins tous les 15 jours jusqu'à la floraison.

11. Procédé selon la revendication 10, **caractérisé en ce que** la concentration d'huile paraffinique introduite sous forme de concentré émulsionnable stable dans l'eau est supérieure à 1% et inférieure à 10% en poids, de préférence supérieure à 1% et inférieure à 5% en poids.

12. Procédé selon l'une des revendications 10 à 11, **caractérisé en ce que** la concentration d'huile paraffinique dans l'eau est comprise entre plus de 1 et 2% en poids.

## Patentansprüche

1. Verwendung einer Ölemulsion zur Akarizid- und Insektizidbehandlung der Stängel und Blätter einer Pflanze während ihres Wachstums in geschlossenen Intensivkulturräumen, **dadurch gekennzeichnet, dass** die Emulsion Wasser und Paraffinöl auf Erdölbasis mit einer Siedetemperatur zwischen 200 und 450 °C, mit einer Viskosität kleiner oder gleich 20 mm²/s bei 40 °C, umfasst, dessen Gehalt an unsulfonierten Rückständen gemäß der Norm ASTM D483 größer oder gleich 99 % ist, und das mindestens 20 Gew.-% mono- oder polycyclische Naphthene umfasst, und das in der Form eines stabilen emulgierbaren Konzentrats eingebracht wird, umfassend Wasser, wobei die Konzentration des Paraffinöls, das in der Form des stabilen emulgierbaren Konzentrats eingebracht wird, in Wasser größer als 1 Gew.-% ist.

2. Verwendung nach Anspruch 1, **dadurch gekennzeichnet, dass** das Paraffinöl eine anfängliche Destillationstemperatur von 250 °C aufweist.

3. Verwendung nach einem der Ansprüche 1 und 2, **dadurch gekennzeichnet, dass** das Paraffinöl durch Dearomatisierung/Fraktionierung mindestens einer Kohlenwasserstofffraktion aus der Destillation von Rohöl, der Verkokung und/oder der Viskoreduktion des Fraktionstemperaturrückstands zwischen 250 und 450 °C und/oder durch katalytische Entparaffinierung dieser Fraktionen erhalten wurde, wobei dieses Öl ein Siedeintervall kleiner oder gleich 75 °C aufweist.

4. Verwendung nach einem der vorhergehenden Ansprüche, **dadurch gekennzeichnet, dass** das Paraffinöl eine Kohlenwasserstofffraktion oder ein Gemisch von Kohlenwasserstofffraktionen mit einer anfänglichen Destillationstemperatur von mindestens 250 °C umfasst, und dessen Viskosität zwischen 5 und 20 mm²/s beträgt.

5. Verwendung nach einem der vorhergehenden Ansprüche, **dadurch gekennzeichnet, dass** das genannte Paraffinöl mindestens 15 ppm Schwefel und mindestens 500 ppm aromatische Verbindungen umfasst.

6. Verwendung nach einem der vorhergehenden Ansprüche, **dadurch gekennzeichnet, dass** die Ölemulsion in Mischung mit dem Paraffinöl in der Form eines stabilen emulgierbaren Konzentrats umfasst: grenzflächenaktive Stoffe der Gruppe bestehend aus polyethoxylierten Oleinsäuren, umfassend bis zu 10 Ethoxylreste, vorzugsweise 4 bis 8, Mono- und/oder Polycarboxylate von Sorbitan, ethoxylierte Mono- und/oder Polycarboxylate von Sorbitan und/oder ethoxylierte Mono- und/oder Polycarboxylate von Glycerin, wobei jede Carboxylatgruppe 1 bis 3 Kohlenstoffketten mit 12 bis 20 Kohlenstoffatomen mit mindestens einer Olefinbindung umfasst, wobei jede ethoxylierte Gruppe 1 bis 5 Ethoxylgruppen umfasst, und ethoxylierte Alkohole, die mit den genannten Säuren vergleichbar sind.

7. Verwendung nach Anspruch 6, **dadurch gekennzeichnet, dass** das Verhältnis der Konzentrationen der Gesamtheit der eingebrachten grenzflächenaktiven Stoffe und des Öls von 0,1:100 bis 5:100 variiert.

8. Verwendung nach einem der Ansprüche 6 und 7, **dadurch gekennzeichnet, dass** das Paraffinöl und die grenzflächenaktiven Stoffe in Wasser in der Form eines emulgierbaren Konzentrats eingebracht werden, das von 0,0001 bis 1 Gew.-% Wasser umfasst.

9. Verwendung nach einem der Ansprüche 6 bis 8, **dadurch gekennzeichnet, dass** die Emulsion aus 90 bis weniger als 99 Gew.-% Wasser und aus 10 bis mehr als 1 % eines Paraffinöls in der Form eines emulgierbaren Konzentrats besteht, vorzugsweise 97 bis weniger als 99 Gew.-% Wasser und mehr als 1% bis 3 % Paraffinöl.

10. Verfahren zur Akarizid- und Insektizidbehandlung von Pflanzenkulturen in einer geschlossenen und kontrollierten Atmosphäre, umfassend:
- mindestens einen ersten Schritt des Emulgierens in Wasser eines Paraffinöls auf Erdölbasis mit einer Siedetemperatur zwischen 200 und 450 °C, mit einer Viskosität von kleiner oder gleich 20 mm²/s, dessen Gehalt an unsulfonierten Rückständen gemäß der Norm ASTM D483 größer oder gleich 99 % ist, und das mehr als 20 Gew.-% Mono- oder Polycnaphthenkohlenwasserstoffe umfasst, gegebenenfalls in Mischung mit grenzflächenaktiven Stoffen und einer Menge an Wasser kleiner oder gleich 1 %, wobei die Konzentration des Paraffinöls, das in der Form des stabilen emulgierbaren Konzentrats eingebracht wird, in Wasser größer als 1 Gew.-% ist;
- mindestens einen zweiten Schritt des Sprühens der in dem vorhergehenden Schritt erhaltenen Emulsion auf den Stängel und die Blätter der Pflanze vor ihrer Blüte, wobei sich diese Dispersion mindestens alle sieben Tage nach dem ersten Besprühen während der gesamten Zeit des Wachstums, vorzugsweise mindestens alle 15 Tage, bis zur Blüte wiederholt.

11. Verfahren nach Anspruch 10, **dadurch gekennzeichnet, dass** die Konzentration des Paraffinöls, das in der Form eines stabilen emulgierten Konzentrats eingebracht wird, in Wasser größer als 1 Gew.-% und kleiner als 10 Gew.-% ist, vorzugsweise größer als 1 Gew.-% und kleiner als 5 Gew.-%.

12. Verfahren nach einem der Ansprüche 10 bis 11, **dadurch gekennzeichnet, dass** die Konzentration des Paraffinöls in Wasser zwischen mehr als 1 und 2 Gew.-% beträgt.

## Claims

1. The use of an oil emulsion for acaricidal, and insecticidal treatment of stems and leaves of a plant during its growth in confined intensive culture spaces, **characterized in that** the emulsion comprises water and a paraffinic oil of petroleum origin with a boiling temperature comprised between 200 and 450°C, with a viscosity of less than or equal to 20 mm²/s at 40°C, of which the non-sulfonated residue content according to the ASTM D483 standard is greater than or equal to 99%, and comprising at least 20% by weight of mono- or poly-cyclic naphthenes, said paraffinic oil being introduced as a stable emulsifiable concentrate comprising water, the concentration of paraffinic oil introduced as a stable emulsifiable concentrate in water being greater than 1% by weight.

2. The use according to claim 1, **characterized in that** the paraffinic oil has an initial distillation temperature of 250°C.

3. The use according to one of claims 1 and 2, **characterized in that** the paraffinic oil was obtained by dearomatisation/fractionation of at least one hydrocarbon cut obtained by the distillation of crude oil, coking and/or visco-reduction of a residue with a cut temperature comprised between 250 and 450°C and/or by catalytic dewaxing of these same cuts, this paraffinic oil having a boiling interval of less than or equal to 75°C.

4. The use according to one of the preceding claims, **characterized in that** the paraffinic oil comprises a hydrocarbon cut or a mixture of hydrocarbon cuts with an initial distillation temperature of at least 250°C, and of which the viscosity is comprised between 5 and 20 mm²/s.

5. The use according to one of the preceding claims, **characterized in that** said paraffinic oil comprises less than 15 ppm of sulfur and less than 500 ppm of aromatics.

6. The use according to one of the preceding claims, **characterized in that** the oil emulsion comprises in a mixture with paraffinic oil as a stable emulsifiable concentrate, surfactants from the group formed by polyethoxylated oleic acids comprising up to 10 ethoxylated radicals, preferably from 4 to 8, sorbitan mono- and/or poly-carboxylates, ethoxylated sorbitan mono- and/or poly- carboxylates and/or ethoxylated glycerol mono- and/or poly-carboxylates, each carboxylate group comprising 1 to 3 carbonaceous chains of 12 to 20 carbon atoms with at least one olefinic bond, each ethoxylated group comprising from 1 to 5 ethoxylated groups, and ethoxylated alcohols comparable with said acids.

7. The use according to claim 6, **characterized in that** the ratio of the concentrations of the whole of the surfactants introduced and of the oil varies from 0.1:100 to 5:100.

8. The use according to one of claims 6 and 7, **characterized in that** the paraffinic oil and the surfactants are introduced into the water as an emulsifiable concentrate comprising from 0.0001 to 1% by weight of water.

9. The use according to one of claims 6 to 8, **characterized in that** the emulsion consists of 90 to less than 99% by weight of water and of 10 to 0.5% of a paraffinic oil as an emulsifiable concentrate, preferably of 97 to less than 99% by weight of water and more than 1% up to 3% of paraffinic oil.

10. A method for acaricidal and insecticidal treatment of plant cultures in a confined and controlled atmosphere comprising:
- at least a first step for emulsifying in the water a paraffinic oil of petroleum origin with a temperature comprised between 200 and 450°C, with a viscosity of less than or equal to 20 mm²/s, of which the non-sulfonated residue content according to the ASTM D483 standard is greater than or equal to 99%, and comprising more than 20% by weight of mono- and poly-naphthenic hydrocarbons, optionally in a mixture with surfactants and an amount of water of less than or equal to 1%, the concentration of paraffinic oil introduced as a stable emulsifiable concentrate in water being greater than 1% by weight.
- at least one second step for spraying the emulsion obtained in the preceding step on the stem and leaves of the plant before its blooming, this dispersion being repeated at least every 7 days after the first spraying during the whole period of the growth, preferably at least every 15 days until blooming.

11. The method according to claim 10, **characterized in that** the concentration of paraffinic oil introduced as a stable emulsifiable concentrate in water is greater than 1% and less than 10% by weight, preferably greater than 15% and less than 5% by weight.

12. The method according to any of claims 10 to 11, **characterized in that** the concentration of paraffinic oil in the water is comprised between 1 and 2% by weight.
